# EUROPÄISCHE PATENTSCHRIFT

(11) **EP 2 461 223 B1**
(45) Veröffentlichungstag und Bekanntmachung des Hinweises auf die Patenterteilung: **05.03.2014**
(21) Anmeldenummer: 11009627.8
(22) Anmeldetag: 06.12.2011
(51) Int. Cl.: G05D 23/13

(54) **Thermostatventil**
Thermostatic valve
Mélangeur thermostatique

(30) Priorität: 06.12.2010 DE 102010053442
(43) Veröffentlichungstag der Anmeldung: 06.06.2012
(73) Patentinhaber: Grohe AG, 58675 Hemer (DE)
(72) Erfinder: Huck, Kai, 58300 Wetter (DE); Riedel, Björn, 44879 Bochum (DE); Schwartpaul, Tanja, 58809 Neuenrade (DE)

(56) Entgegenhaltungen:
- WO-A1-02/27224
- DE-A1-102007 049 089
- DE-C- 821 295

## Beschreibung

Die Erfindung betrifft ein Thermostatventil für zwei Flüssigkeiten mit unterschiedlichen Temperaturen, wie beispielsweise für Kalt- und Warmwasser. Derartige Thermostatventile werden beispielsweise in Sanitärarmaturen eingesetzt.

Thermostatgeregelte Mischventile insbesondere zum Bereitstellen von temperiertem Wasser für Duschen, Badewannen, Waschbecken o.dgl. sind grundsätzlich bekannt. Beispiele hierfür finden sich in DE 41 16 954 A1, EP 0 242 680 B1, DE 102 28 212 A1 und DE 10 2007 049 089 A1. Die bekannten Thermostat-Mischventile weisen ein (zumeist rotationssymmetrisches) Gehäuse auf, das einen Kaltwassereinlass und einen Warmwassereinlass sowie einen Mischwasserauslass aufweist. Die Kaltwasser- und Warmwassereinlässe sind z.B. in Form mehrerer in Umfangsrichtung verlaufender schlitzförmiger Öffnungen mit dazwischen liegenden Stegen in der Wandung des Gehäuses ausgebildet, während der Mischwasserauslass beispielsweise zentral am unteren Ende des Gehäuses angeordnet ist. Die Einlassöffnungen für Kalt- und Warmwasser werden im Zusammenspiel mit einem als Ventilschieber ausgebildeten Ventilkörper mit Doppelventilsitz umgekehrt proportional zueinander mehr oder weniger welt geöffnet bzw. geschlossen, um Mischwasser der gewünschten, voreingestellten Temperatur abzugeben. Hierzu weist das Mischventil einen Thermostaten auf, der mit dem Ventilkörper gekoppelt ist. Der Ventilkörper ist über eine (Rückhol-)Feder in eine durch die voreingestellte Temperatur definierte Stellung vorgespannt. Der Thermostat weist einen Stößel auf, der in Abhängigkeit von der Temperatur der an einem Fühler (des Thermostaten) entlang fließenden Mischwasserströmung aus dem Thermostaten heraus bewegbar ist und den Ventilkörper dabei gegen die Vorspannung der Rückholfeder bewegt.

Die Regelgüte der bekannten thermostatischen Mischeinrichtungen bei verschiedenen Betriebsbedingungen ist unter anderem abhängig von der Größe des sogenannten Regelspalts. Als Regelspalt wird dabei die Summe der Querschnittsbreiten des Kalt- und Warmwasserzulaufs beidseitig des Ventilkörpers bezeichnet. In DE 10 2007 049 089 A1 ist beschrieben, wie dieser Regelspalt werkseitig reproduzierbar sowie frei von Additionen der Fertlgungstoleranzen der Einzelteile des Thermostatventils einstellbar ist.

Im Rahmen von Versuchen hat sich darüber hinaus herausgestellt, dass die Regelgüte von Thermostatventilen der zuvor beschriebenen Art auch abhängig ist von der Verdrehposition des Ventilkörpers relativ zu den in Umfangsrichtung nebeneinanderliegenden Einlassöffnungen der Kalt- und Warmwassereinlässe.

Aufgabe der Erfindung ist es, ein bezüglich seiner Regelgüte weiter verbessertes Thermostatventil zu schaffen.

Zur Lösung dieser Aufgabe wird mit der Erfindung ein Thermostatventil für zwei Flüssigkeiten mit unterschiedlichen Temperaturen, wie beispielsweise Kalt- und Warmwasser, vorgeschlagen, wobei das Thermostatventil versehen ist mit
- einem Gehäuse, das einen ersten Flüssigkeitseinlass für die erste Flüssigkeit sowie einen zweiten Flüssigkeitseinlass für die zweite Flüssigkeit und einen Mischflüssigkeitsauslass aufweist,
- einem in dem Gehäuse angeordneten Ventilschieber, der zwischen einem dem ersten Flüssigkeitseinlass zugeordneten ersten Ventilsitz und einen dem zweiten Flüssigkeitseinlass zugeordneten zweiten Ventilsitz des Gehäuses verschiebbar ist, und
- einem mit dem Ventilschieber zwecks dessen Verschiebung zusammenwirkenden automatischen Verstellelement zum Verschieben des Ventilschiebers zwecks Erreichens und/oder Aufrechterhaltens einer vorgebbaren Flüssigkeitsmischtemperatur,
- wobei der erste und der zweite Flüssigkeitseinlass jeweils eine Gruppe aus mehreren in dem Gehäuse ausgebildeten ersten und zweiten Einlassöffnungen aufweist, zwischen denen jeweils Stege angeordnet sind und
- wobei der Ventilschieber mehrere durch Stege voneinander getrennte Überströmkanäle für eine über den ersten Ventilsitz einströmende erste Flüssigkeit und eine über den zweiten Ventilsitz einströmende zweite Flüssigkeit aufweist.

Bei diesem Thermostatventil ist erfindungsgemäß vorgesehen, dass der Ventilschieber innerhalb des Gehäuses bezogen auf die Einlassöffnungen derart reproduzierbar verdrehbar ist, dass seine Stege in einer vorgebbaren Verdrehposition relativ zu den Stegen zwischen den ersten und zweiten Einlassöffnungen der Einlässe für die beiden Flüssigkeiten angeordnet sind.

Bei dem erfindungsgemäßen Thermostatventil lässt sich der Ventilschieber innerhalb des Gehäuses reproduzierbar verdrehen, und zwar relativ zu den Einlassöffnungen der Kalt- und Warmwassereinlässe. Diese Positionierung lässt sich von außerhalb des Gehäuses manuell oder mit Hilfe eines Werkzeuges vornehmen bzw. lässt sich während des Zusammenbaus des Thermostatventils von außerhalb derjenigen Baueinheit, in die der Ventilschieber eingesetzt ist, des Thermostatventils manuell oder mit Hilfe eines Werkzeuges einstellen.

Mit der Erfindung wird also erstmalig die Möglichkeit geschaffen, die Verdrehposition des Ventilschiebers innerhalb des Gehäuses und relativ zu den Stegen der nebeneinariderliegenden Einlassöffnungen der Kalt- und Warmwassereinlässe reproduzierbar einzustellen, wobei die Verdrehposition zweckmäßigerweise von außerhalb des Gehäuses visuell erkennbar ist. Dies kann zweckmäßigerweise dadurch erfolgen, dass ein bezüglich einer Verdrehung des Ventilschiebers form- oder kraftschlüssig mit diesem verbundenes, von außerhalb des Gehäuses erkennbares Element (nachfolgend auch als Einstellelement bezeichnet) manuell oder mit Hilfe eines Werkzeuges in eine vorgebbare Referenzposition überführbar ist, die repräsentativ für die gewünschte Verdrehposition des Ventilschiebers innerhalb des Gehäuses ist. Das besagte Einstellelement ist zweckmäßigerweise von außerhalb des Gehäuses manuell oder mit Hilfe eines Werkzeuges verdrehbar. Entsprechend ist dieses Prinzip auch für eine Baueinheit des erfindungsgemäßen Thermostatventils einsetzbar, in die der Ventilschieber während der Montage des Thermostatventils eingesetzt ist. Das besagte Einstellelement lässt sich damit also von außerhalb dieser Baueinheit manuell oder mit Hilfe eines Werkzeuges in eine gewünschte Referenzposition überführen, bevor alsdann das Thermostatventil vollständig zusammengesetzt wird.

Die Referenzposition iässt sich zweckmäßigerweise direkt oder indirekt mit Hilfe eines Anzeigeelements visualisieren. Beispielsweise können das zuvor genannte Einstellelement und das Gehäuse mit Referenzmarkierungen versehen sein, deren Relativposition die Verdrehposition des Ventilschiebers repräsentiert. Zu diesem Zweck ist es von Vorteil, wenn die Relativposition von Ventilschieber und Einstellelement bei deren Verbindung eindeutig definiert ist. Dies gelingt beispielsweise durch eine entsprechende mechanische Kodierung des Ventilschiebers und des Einstellelements.

Bei dem Einstellelement handelt es sich beispielsweise um einen insbesondere hülsenförmigen Strömungshohlkörper für das Mischwasser, der in den Mischwasserauslass des Thermostatventils eingesetzt ist. Derartige Hohlkörper sind an sich bekannt und enden in der Mischwasser-Auslassöffnung des Gehäuses, mit der sie im Regelfall fluchten. Dieser Hohlkörper könnte nun mit einer Handhabe zur manuellen Verdrehung bzw. zur Verdrehung mit Hilfe eines Werkzeuges versehen werden. Der Hohlkörper kann an seiner Innenseite axiale und parallel zueinander verlaufende Rippen aufweisen, die der Mischwasserströmungsvergleichmäßigung dienen. Innerhalb des Hohlkörpers befindet sich dann der temperaturempfindliche Bereich des Thermostaten, wie es bei bekannten Thermostatventilen der Fall ist.

Mit der Erfindung ist es möglich, ein Verfahren zum Ausrichten des Ventilschiebers eines Thermostatventils der oben genannten Art relativ zu dessen Einlassöffnungen anzugeben, indem der Ventilschieber während des Zusammenbaus des Thermostatventils oder nach dem Zusammenbau derart reproduzierbar positioniert wird, dass seine Stege zwischen seinen Überströmöffnungen in einer vorgegebenen Verdrehposition relativ zu den Stegen zwischen jeweils den ersten und zweiten Einlassöffnungen der Kalt- und Warmwassereinlässe angeordnet sind.

Die Erfindung wird nachfolgend anhand eines Ausführungsbeispiels und unter Bezugnahme auf die Zeichnung näher erläutert. Im Einzelnen zeigen dabei:
- Fig. 1: ein erfindungsgemäßes Thermostatventil im Längsschnitt,
- Fig. 2: einen Querschnitt durch das Thermostatventil in Höhe der Linie II-II der Fig. 1,
- Fig. 3: einen Querschnitt entlang der Linie III-III der Fig. 1 und
- Fig. 4: eine Unteransicht auf das Thermostatventil entsprechend dem Pfeil IV der Fig. 1.

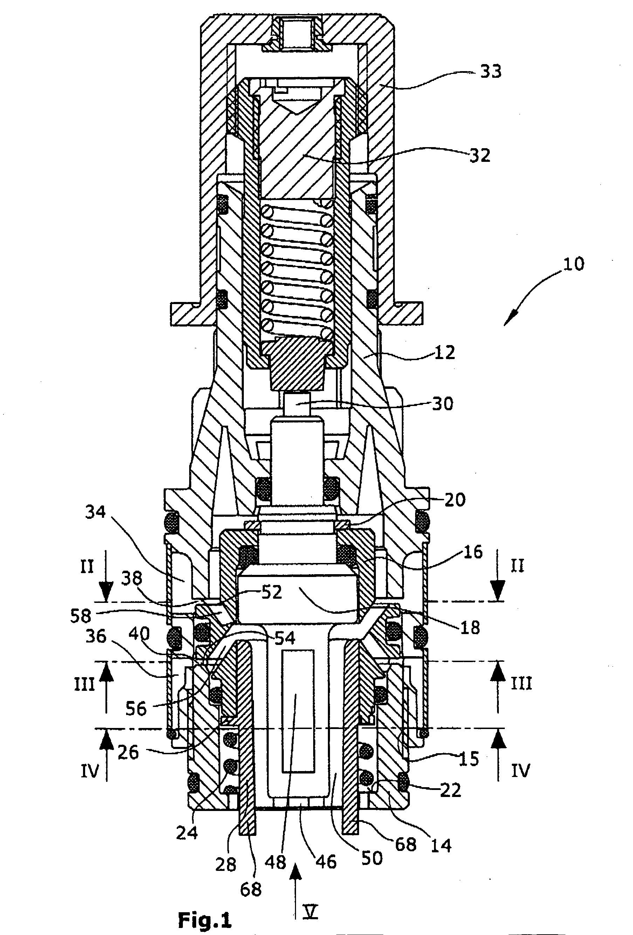

Fig. 1 zeigt ein Thermostatventil mit einem Gehäuse 10 im Längsschnitt. Ein derartiges Thermostatventil-Gehäuse 10 kann in eine dafür vorgesehene Öffnung oder Bohrung einer Sanitärarmatur als Baueinheit eingesetzt werden. Das Gehäuse 10 des Thermostatventils wird von einem Kopfstück 12 und einem Bodenteil 14 gebildet, die über ein Gewinde 15 miteinander verschraubt und damit axial verschieblich zueinander angeordnet sind. In dem Thermostatventil-Gehäuse 10 ist ein Ventilschieber 16 in Form eines Doppelventilsitzschiebers axial begrenzt verschiebbar angeordnet, und zwar zwischen einem Kaltwasser-Ventilsitz und einem Warmwasser-Ventilsitz, wie weiter unten noch erläutert werden wird. Koaxial zum Ventilschieber 16 ist in diesem ein Dehnstoffelement/Weg-Temperaturgeber 18 angeordnet, an dem der Ventilschieber 16 mittels eines Sprengrings 20 befestigt ist. An einer inneren Stirnseite 22 des Bodenteils 14 stützt sich eine Rückstellfeder 24 ab, die andererseits an einem Flansch 26 einer Strömungshülse 28, welche in Verbindung mit dem Ventilschieber 16 steht, anliegt, so dass der Dehnstoffelement/Weg-Temperaturgeber 18 in Richtung auf das Kopfstück 12 vorgespannt ist. Der Dehnstoffelement/Weg-Temperaturgeber 18 liegt mit seinem axial auslenkbaren Stößel 30 an einer Temperaturvorwählvorrichtung 32 an, über die mittels eines Drehorgans 33 ein Sollwert für die Mischwassertemperatur eingestellt werden kann. Bei einer Drehbewegung des Drehorgans 33, das mit einem (nicht dargestellten) Drehknopf der Sanitärarmatur drehfest verbunden ist, wird die Temperaturvorwähleinrichtung 32 axial zum Kopfstück 12 bewegt, wobei diese Temperaturvoreinstellbewegung an dem Stößel 30 auf den Dehnstoffelement/Weg-Temperaturgeber 18 und damit auf den Ventilschieber 16 übertragen wird.

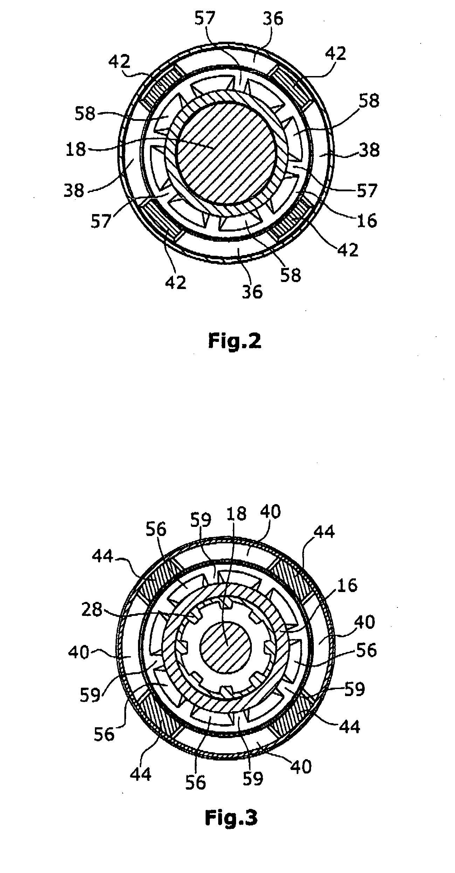

Durch einen Kaltwassereinlass 34 und einen Warmwassereinlass 36 des Gehäuses 10 fließt je nach Stellung des Ventilschiebers 16 Kalt- bzw. Warmwasser durch dafür vorgesehene Kaltwasser-Einlassöffnungen 38 bzw. Warmwasser-Einlassöffnungen 40, die in zwei axial voneinander beabstandeten Radialebenen (siehe die Querschnittsebenen II und III der Fig. 1 sowie die Fign. 2 und 3) jeweils nebeneinanderliegend angeordnet sind und z.B. die Form von sich in Umfangsrichtung erstreckenden Schlitzen aufweisen und durch Stege 42 bzw. 44 getrennt sind.

Der Dehnstoffelement/Weg-Temperaturgeber 18 ist koaxial zur Mittelachse des Thermostatventil-Gehäuses 10 angeordnet und weist stromabwärts des Ventilschiebers 16 und vor dem Mischwasserauslass 46 im Bodenteil 14 des Gehäuses 10 einen Temperaturfühlbereich 48 auf, der sich bis zum Mischwasserauslass 46 im Bodenteil 14 erstreckt, und zwar innerhalb des Mischwasserkanals 50, der von der Strömungshülse 28 gebildet ist.

Das vorstehend beschriebene Thermostatventil-Gehäuse 10 wird als Ganzes in eine dafür vorgesehene Öffnung eines Sanitärarmaturengehäuses eingesetzt und hat folgende Funktionsweise. Die Mischwasser-Solltemperatur wird über eine Verdrehung des Drehorgans 33 mit der Temperaturvorwählvorrichtung 32 durch eine entsprechende Axialverschiebung des Dehnstoffelement/Weg-Temperaturgebers 18 mit samt dem Ventilschieber 16 in die Axialposition zur Erzeugung der erforderlichen Querschnitte an dem dem Kaltwassereinlass 34 zugeordneten Kaltwasser-Ventilsitz 52 und an dem dem Warmwassereinlass 36 zugeordneten Warmwasser-Ventilsitz 54 des Ventilschiebers 16 eingestellt. Über die Einlässe 34,36 gelangen Kalt- und Warmwasserströmungen in den Mischwasserkanal 50, werden hier vermischt und gelangen in den Temperaturfühlbereich 48. Dabei strömt das Warmwasser durch Überströmöffnungen 56 des Ventilschiebers 16, die sich mit weiteren Überströmöffnungen 58 des Ventilschiebers 16 kreuzen können, durch welche Kaltwasser strömt. Beide Strömungen mischen sich stromabwärts des Ventilschiebers 16. Die Strömungshü!se 28 kann auf ihrer Innenseite axial verlaufende, zueinander parailele Rippen zum Leiten der Mischwasserströmung entlang dem Temperaturfühlbereich 48 aufweisen. Bei infolge von Änderungen der Vorlauftemperatur insbesondere des Warmwassers auftretenden Mischwassertemperaturänderungen wird diese geänderte Temperatur über den Temperaturfühlbereich 48 erfasst. Ein in dem Dehnstoffelement/Weg-Temperaturgeber 18 befindlicher Dehnstoff wird daraufhin eine axiale Auslenkung des Stößels 30 verursachen, so dass eine axiale Verschiebung des Ventilschiebers 16 erfolgt. Die Einlassquerschnitte an den Kaltwasser- und Warmwasser-Ventilsitzen 52,54 werden hierbei gegenläufig entsprechend verändert, so dass die Istwert-Temperatur des Mischwassers wieder der Sollwert-Temperatur angepasst wird.

In DE 10 2007 049 089 A1 wird erläutert, dass die Regelgüte des Thermostatventils neben der Art des Dehnstoffs des Weg-Temperaturgebers 18 und der Abmessungen des Thermostatventil-Gehäuses 10 auch von der Größe der Einlassquerschnitte an den Kalt- und Warmwasser-Ventilsitzen 52 und 54 beeinflusst wird. Die Summe dieser Einlassquerschnitte wird auch als Regelspalt bezeichnet. Um bei der Fertigung von Thermostatventilen für diese gleiche Regelgüten zu erreichen, ist daher eine exakte Einstellung des Regelspalts erforderlich. In der zuvor genannten Schrift wird hierzu erläutert, wie das Gehäuse 10 konstruiert werden kann, damit die Einstellung des Regelspalts unabhängig von der Addition von Fertigungstoleranzen der Einzelteile des Thermostatventils erfolgen kann.

Nach der zuvor genannten Schrift ist die Konstruktion des Gehäuses 10 des Thermostatventils gemäß Fig. 1 so gewählt, dass für die Einstellung des Regelspalts keine weiteren Fertigungstoleranzen beachtet werden müssen, als die des zwischen dem Kopfstück 12 und dem Bodenteil 14 angeordneten Gewindes 15. Während bei anderen bekannten Thermostatventilen Fertigungstoleranzen des Kopfstücks 12, des Bodenteils 14 (oder allgemein der Einzelteile des Gehäuses 10) und des Ventilschiebers 16 bei der Berechnung des Regelspalts mit beachtet werden müssen, ermöglicht es die Konstruktion des Gehäuses 10, den Regelspalt allein durch das Ausmaß, in dem das Kopfstück 12 und das Bodenteil 14 miteinander verschraubt sind, einzustellen; denn während der Kaltwasser-Ventilsitz 52 am Kopfstück 12 ausgebildet ist, befindet sich der Warmwasser-Ventilsitz 54 am Bodenteil 14. Zur Einstellung des Regelspalts wird beim Zusammenbau des Thermostatventil-Gehäuses 10 der Ventilschieber 16 zunächst über die Temperaturvorwählvorrichtung 32 in eine Stellung gebracht, in der er am Kaltwasser-Ventilsitz 52 des Kopfstücks 12 zur Anlage kommt. Daraufhin wird das Bodenteil 14 "auf Block" in das Kopfstück 12 eingeschraubt, bis der Warmwasser-Ventilsitz 54 des Bodenteils 14 zur Anlage an den Ventilschieber 16 gelangt. In diesem Zustand liegt der Ventilschleber 16 an beiden Ventilsitzen 52,54 an, und es ist kein Regelspalt vorhanden. Nun wird das Bodenteil 14 wieder zurückgedreht. Bei vorgegebener bekannter Steigung des Gewindes 15 kann über den Verdrehwinkel, um den das Bodenteil 14 relativ zum Kopfstück 12 zurückgedreht worden ist, die Längsverschiebung beider Teile und damit der Regelspalt genau vorgegeben werden. Nach dieser Einstellung des Regelspalts kann die aktuelle Längsverschiebeposition von Kopfstück 12 und Bodenteil 14 beispielsweise mittels eines Ultraschweißpunktes oder einer anderen dauerhaft festen Verbindung beider Teile fixiert werden, so dass diese ohne Aufbringen eines bestimmten Lösemoments nicht wieder verdreht werden können.

Es hat sich bei weiteren Versuchen gezeigt, dass die Regelgüte nicht nur von der Größe des Regelspalts sondern auch von der Verdrehposition des Ventilschiebers 16 relativ zu den Kaltwasser- und Warmwasser-Einlassöffnungen 38,40 abhängig ist. Wie bereits oben erwähnt, sind diese Einlassöffnungen 38,40 jeweils durch die Stege 42 bzw. 44 voneinander getrennt. Genauso sind auch die Überströmöffnungen 56,58 im Ventilschieber 16 durch Stege 57,59 o.dgl. Vollmaterial voneinander getrennt. Es ist zu vermuten, dass unterschiedliche relative Ausrichtungen der einzelnen Stege von Gehäuse 10 und Ventilschieber 16 und damit der Kaltwasser- und Warmwasser-Einlassöffnungen 38,40 zu den Überströmkanälen des Ventilschiebers 16 Einfluss auf das Verhalten und die Regelgüte des Thermostatventils haben.

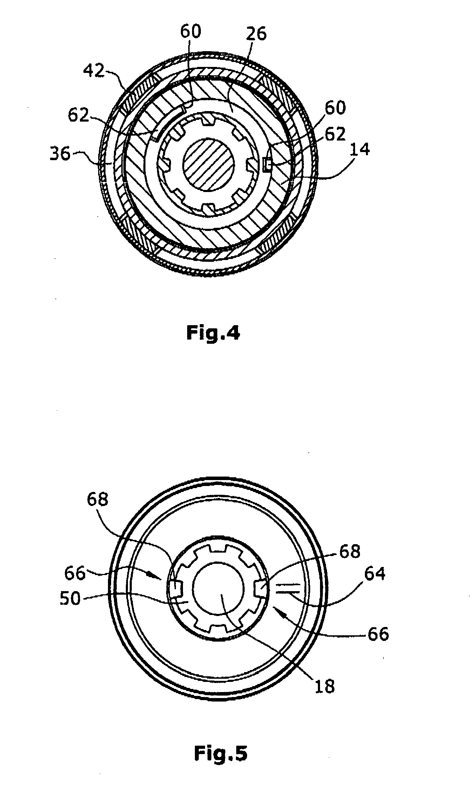

Erfindungsgemäß wird daher zur (weiteren) Verbesserung der Regelgüte vorgeschlagen, den Ventilschieber 16 in eine wohl definierte, vorbestimmte Verdrehposition zu überführen bzw. in einer derartigen Position in das Gehäuse 10 einzusetzen und die aktuelle Verdrehposition des Ventilschiebers 16 visuell anzuzeigen. Eine Möglichkeit der Realisierung dieses Vorschlags besteht darin, beispielsweise die Strömungshülse 28 drehfest mit dem Ventilschieber 16 zu verbinden, was beispielsweise durch einen entsprechenden Formschluss oder Kraftschluss beider Elemente erfolgen kann. Hierzu kann der Flansch 26 der Strömungshülse 28 mit einer Aussparung 60 versehen sein, in die ein komplementär zur Form der Aussparung ausgebildeter Vorsprung 62 am Ventilschleber 16 eingetaucht ist. Dabei sollten beide Elemente lediglich in einer einzigen Relativ-Verdrehposition miteinander mechanisch drehfest verbunden werden können, was beispielsweise durch eine mechanische Kodierung erfolgen kann. Alternativ können die Strömungshülse 28 und der Ventilschieber 16 oder ein mit diesem kraftschlüssig verbundenes Tell z.B. auch durch eine Riefenverzahnung kraft- bzw. formschlüssig verbunden sein. Über beispielsweise an der strömungshülse 28 ausgebildete unterschiedliche große Ausnehmungen und über zu der Größe dieser Ausnehmungen korrespondierende Vorsprünge an dem Ventilschieber 16 kann dies realisiert werden. Nun kann beispielsweise am Bodenteil 14 des Gehäuses 10 eine Referenzmarkierung 64 angebracht werden, während an der Strömungshülse 28 ebenfalls eine Markierung 66 vorgesehen wird. Diese weitere Markierung kann beispielsweise aus einem oder zwei über das Bodenteil 14 und damit über den Mischwasserauslass 46 überstehenden Vorsprüngen 68 bestehen. Die Verdrehposition des Ventilschiebers 16 innerhalb des Gehäuses 10 lässt sich damit bei Betrachtung des Bodenteils 14 in Richtung des Pfeils IV der Fig. 1 (siehe Fig. 4) überprüfen, indem überprüft wird, ob die beiden Referenzmarkierungen 64 und 66 eine zuvor definierte Relativposition zueinander aufweisen. Eine Verdrehung des Ventilschiebers 16 im eingebauten Zustand lässt sich manuell oder mit Hilfe eines Werkzeuges von außen durchführen, indem der Vorsprung 68 bzw. die Vorsprünge 68 erfasst wird/werden bzw. am Ende der Strömungshülse 28 in anderer Weise manuell oder per Werkzeug eingegriffen wird.

Die Erfindung wurde vorstehend anhand eines Thermostatventils mit einer speziellen Anordnung der Überströmkanäle des Ventilschiebers beschrieben. Es sei an dieser Stelle darauf hingewiesen, dass die Erfindung nicht auf derartige Ventilschieber beschränkt ist, sondern auch für Ventilschieber mit beispielsweise axial und parallel zueinander verlaufenden Überströmkanälen Anwendung findet. Auch bedarf es zur Realisierung der Verdrehbarkeit des Ventilschiebers und der visuellen Anzeige der Verdrehposition des Ventilschiebers innerhalb des Gehäuses nicht notwendigerweise des Vorhandenseins der Strömungshülse. Auf diese Hülse kann also Insoweit verzichtet werden, wobei es dann beispielsweise wiederum über den Mischwasserauslass 46 gelingt, mit Hilfe eines Werkzeuges den Ventilschieber 16 zu erfassen, um diesen in eine vorgegebene Verdrehposition zu überführen. Durch Markierungen am Ventilschieber 16 einerseits sowie am Gehäuse 10 (insbesondere Bodenteil 14) andererseits gelingt es dann wieder, die Verdrehposition des Ventilschiebers 16 relativ zum Gehäuse 10 anzuzeigen.

### Bezugszeichenliste

- 10: Thermostatventil-Gehäuse
- 12: Kopfstück des Thermostatventil-Gehäuses
- 14: Bodenteil des Thermostatventil-Gehäuses
- 15: Gewinde zwischen Kopfstück und Bodenteil
- 16: Ventilschieber
- 18: Verstellelement / Thermostatelement / Weg-Temperaturgeber
- 20: Sprengring
- 22: Stirnseite des Bodenteils
- 24: Rückstellfeder
- 26: Flansch der Strömungshülse
- 28: Strömungshülse
- 30: Stößel des Dehnstoffelement/Weg-Temperaturgeber
- 32: Temperaturvorwählvorrichtung
- 33: Drehorgan der Temperaturvorwählvorrichtung
- 34: Kaltwassereinlass im Gehäuse
- 36: Warmwassereinlass im Gehäuse
- 38: Kaltwasser-Einlassöffnungen
- 40: Warmwasser-Einlassöffnungen
- 42: Stege zwischen den Kaltwasser-Elnlassöffnungen
- 44: Stege zwischen den Warmwasser-Einlassöffnungen
- 46: Mischwasserauslass des Gehäuses
- 48: Temperaturfühlbereich des Dehnstoffelement/Weg-Temperaturgebers
- 50: Mischwasserkanal im Gehäuse
- 52: Kaltwasser-Ventilsitz im Gehäuse bzw. am Ventilschleber
- 54: Warmwasser-Ventilsitz im Gehäuse bzw. am Ventilschieber
- 56: Überströmöffnungen im Ventilschieber
- 57: Stege zwischen den Überströmöffnungen
- 58: Überströmöffnungen im Ventilschieber
- 59: Stege zwischen den Überströmöffnungen
- 60: Kodierungsaussparung an der Strömungshülse, Anzeigeelement
- 62: Kodierungsvorsprung am Ventilschieber, Anzeigeelement
- 64: Referenzmarkierung am Gehäuse bzw. am Bodenteil
- 66: Referenzmarkierung an der Strömungshülse
- 68: Handhabungs-/Verdrehvorsprünge an der Strömungshülse

## Patentansprüche

1. Thermostatventil für zwei Flüssigkeiten mit unterschiedlichen Temperaturen, wie z.B. Kalt- und Warmwasser, mit
- einem Gehäuse (10), das einen ersten Flüssigkeitseinlass (34) für die erste Flüssigkeit sowie einen zweiten Flüssigkeitseinlass (36) für die zweite Flüssigkeit und einen Mischflüsslgkeltsauslass (46) aufweist,
- einem in dem Gehäuse (10) angeordneten Ventilschieber (16), der zwischen einem dem ersten Flüssigkeitseinlass (34) zugeordneten ersten Ventilsitz (52) und einen dem zweiten Flüssigkeitseinlass (36) zugeordneten zweiten Ventilsitz (54) des Gehäuses (10) verschiebbar ist,
- einem mit dem Ventilschieber (16) zwecks dessen Verschiebung zusammenwirkenden Verstellelement (18) zum Verschieben des Ventilschiebers (16) zwecks Erreichens und/oder Aufrechterhaltens einer vorgebbaren Flüssigkeitsmischtemperatur,
- wobei der erste und der zweite Flüssigkeitseinlass (34,36) jeweils eine Gruppe aus mehreren in dem Gehäuse (10) ausgebildeten ersten und zweiten Einlassöffnungen (38,40) aufweist, zwischen denen jeweils Stege (42,44) angeordnet sind und
- wobei der Ventilschieber (16) mehrere durch Stege (59) voneinander getrennte Überströmkanäle (56,58) für die über den ersten Ventilsitz (52) einströmende erste Flüssigkeit und die über den zweiten Ventilsitz (54) einströmende zweite Flüssigkeit aufweist,
**dadurch gekennzeichnet ,**
**dass** an dem Gehäuse (10) ein Anzeigeelement (60,62) zur direkten oder indirekten Visualisierung der Verdrehposition des Ventilschiebers (16) vorgesehen ist, der Innerhalb des Gehäuses (10) bezogen auf die Einlassöffnungen (38,40) derart reproduzierbar verdrehbar Ist, dass seine Stege (59) in einer vorgebbaren Verdrehposition relativ zu den Stegen (42,44) zwischen den ersten und zweiten Einlassöffnungen (38,40) der Einlässe (34,36) für die beiden Flüssigkeiten angeordnet sind.

2. Thermostatventil nach Anspruch 1, **dadurch gekennzeichnet, dass** die Verdrehposition des Ventilschiebers (16) relativ zu den ersten und zweiten Einlassöffnungen (38,40) visuell von außerhalb des Gehäuses (10) erkennbar ist.

3. Thermostatventil nach Anspruch 1 oder 2, **dadurch gekennzeichnet, dass** der Ventilschleber (16) von außerhalb des Gehäuses (10) manuell oder mittels eines Werkzeuges verdrehbar ist.

4. Thermostatventil nach einem der Ansprüche 1 bis 3, **dadurch gekennzeichnet, dass** der Ventilschieber (16) mechanisch mit einer Strömungshülse (28) für die Mischflüssigkeit gekoppelt ist, der bis in den Mischflüssigkeitsauslass (46) des Gehäuses (10) hinein oder aus diesem herausragt oder von außen durch diesen sichtbar ist, und dass durch die Verdrehstellung der Strömungshülse (28) relativ zum Gehäuse (10) die Verdrehposition des Ventilschiebers (16) visuell darstellbar ist.

5. Thermostatventil nach Anspruch 4, **dadurch gekennzeichnet, dass** die Strömungshülse (28) und das Gehäuse (10) im Bereich des Mischflüssigkeitsauslasses (46) Markierungen (64,66) aufweisen, wobei die Verdrehposition des Ventilschiebers (16) relativ zu den ersten und zweiten Einlassöffnungen (38,40) durch die Relativposition der Markierungen (64,66) anzeigbar ist.

6. Thermostatventil nach einem der Ansprüche 1 bis 5, **dadurch gekennzeichnet, dass** die Stege (42) zwischen den ersten Einlassöffnungen (38) in Verlängerung der Stege (44) zwischen den zweiten Einlassöffnungen (40) angeordnet sind.

7. Thermostatventil nach einem der Ansprüche 1 bis 6, **dadurch gekennzeichnet, dass** das Gehäuse (10) im Wesentlichen hohlzylindrisch und der Ventilschieber (16) im wesentlichen vollzylindrisch ist.

## Claims

1. Thermostatic valve for two fluids of different temperatures, for example hot and cold water, having
- a housing (10), which has a first fluid inlet (34) for the first fluid and a second fluid inlet (36) for the second fluid, and a mixed fluid outlet (46),
- and, arranged in the housing (10), a valve slider (16) which is movable between a first valve seat (52), associated with the first fluid inlet (34), and a second valve seat (54), associated with the second fluid inlet (36), of the housing (10),
- and, co-operating with the valve slider (16) for the purpose of moving the latter, a regulating element (18) for moving the valve slider (16) for the purpose of attaining and/or maintaining a prespecifiable fluid mixing temperature,
- the first and the second fluid inlets (34, 36) each having a group of a plurality of first and second inlet apertures (38, 40) formed in the housing (10), between which there are arranged dividers (42, 44) in each case and
- the valve slider (16) having a plurality of flow-over channels (56, 58), separated from one another by dividers (59), for the first fluid flowing in by way of the first valve seat (52) and the second fluid flowing in by way of the second valve seat (54),
**characterised in that**
there is provided on the housing (10) a display element (60, 62) for direct or indirect visualisation of the turning position of the valve slider (16), the latter being arranged to be turned within the housing (10) relative to the inlet apertures (38, 40) in a reproducible manner such that its dividers (59) are arranged in a prespecifiable turning position relative to the dividers (42, 44) between the first and second inlet apertures (38, 40) of the inlets (34, 36) for the two fluids.

2. Thermostatic valve according to claim 1, **characterised in that** the turning position of the valve slider (16) relative to the first and second inlet apertures (38, 40) is visually discernible from outside the housing (10).

3. Thermostatic valve according to claim 1 or 2, **characterised in that** the valve slider (16) is arranged to be turned from outside the housing (10) manually or using a tool.

4. Thermostatic valve according to one of claims 1 to 3, **characterised in that** the valve slider (16) is mechanically coupled to a flow tube (28) for the mixed fluid which extends into the mixed fluid outlet (46) of the housing (10) or extends out therefrom or which is visible through the outlet from the outside, and **in that**, by virtue of the turning position of the flow tube (28) relative to the housing (10), a visual representation of the turning position of the valve slider (16) can be provided.

5. Thermostatic valve according to claim 4, **characterised in that** the flow tube (28) and the housing (10) have markings (64, 66) in the region of the mixed fluid outlet (46), the turning position of the valve slider (16) relative to the first and second inlet apertures (38, 40) being arranged to be indicated by the relative position of the markings (64, 66).

6. Thermostatic valve according to one of claims 1 to 5, **characterised in that** the dividers (42) are arranged between the first inlet apertures (38), in continuation of the dividers (44) between the second inlet apertures (40).

7. Thermostatic valve according to one of claims 1 to 6, **characterised in that** the housing (10) is substantially in the form of a hollow cylinder and the valve slider (16) is substantially in the form of a solid cylinder.

## Revendications

1. °) Mélangeur thermostatique permettant de mélanger deux liquides ayant des températures différentes tels que par exemple de l'eau froide et de l'eau chaude comportant :
- un boitier (10) qui comporte une première entrée de liquide (34) pour le premier liquide et une seconde entrée de liquide (36) pour le second liquide ainsi qu'une sortie (46) du liquide mélangé,
- un poussoir de clapet (16) monté dans le boitier (10) pouvant coulisser entre un premier siège (52) du boîtier (10) associé à la première entrée de liquide (34) et un second siège du boitier (10) associé à la seconde entrée de liquide (36),
- un élément de réglage (18) coopérant avec le poussoir (16) pour permettre de faire coulisser ce poussoir (16) de façon à atteindre et/ou à maintenir une température prédéfinie du liquide mélangé,
- la première et la seconde entrée de liquide (34, 36) comportant respectivement un groupe constitué par plusieurs premières et secondes ouvertures d'entrée (38, 40) réalisées dans le boitier (10) entre lesquelles sont respectivement positionnés des traverses (42, 44), et
- le poussoir (16) comportant plusieurs canaux d'écoulement (56, 58) séparés les uns des autres par des traverses (59) du premier liquide s'écoulant sur le premier siège (52) et du second liquide s'écoulant sur le second siège (54),
**caractérisé en ce que**
sur le boitier (10) est monté un élément indicateur (60, 62) permettant la visualisation directe ou indirecte de la position en rotation du poussoir (16) et qui peut être déplacé en rotation à l'intérieur du boitier (10) de façon reproductible par rapport aux ouvertures d'entrée (38, 40) de sorte que sa traverse (59) soit positionnée dans une position en rotation prédéfinie par rapport aux traverses (42, 44) situées entre les premières et les secondes ouvertures d'entrée (38, 40) des entrées (34, 36) des deux liquides.

2. °) Mélangeur thermostatique conforme à la revendication 1,
**caractérisé en ce que**
la position en rotation du poussoir (16) par rapport aux premières et aux secondes ouvertures d'entrée (38, 40) peut être visualisée de l'extérieur du boitier (10).

3. °) Mélangeur thermostatique conforme à la revendication 1 ou 2,
**caractérisé en ce que**
le poussoir (16) peut être déplacé en rotation manuellement ou au moyen d'un outil à partir de l'extérieur du boitier (10).

4. °) Mélangeur thermostatique conforme à l'une des revendications 1 à 3,
**caractérisé en ce que**
le poussoir (16) est accouplé mécaniquement à un manchon d'écoulement (28) du liquide mélangé qui s'étend jusque dans la sortie du liquide mélangé (46) du boitier (10) ou dépasse de celui-ci et est visible de l'extérieur au travers de celui-ci, et
la position en rotation du manchon d'écoulement (28) relativement au boitier (10) permet de représenter visuellement la position en rotation du poussoir (16).

5. °) Mélangeur thermostatique conforme à la revendication 1,
**caractérisé en ce que**
le manchon d'écoulement (28) et le boitier (10) comportent des repères (64, 66) dans la zone de la sortie (46) du liquide mélangé, la position en rotation du poussoir (16) par rapport aux premières et aux secondes ouvertures d'entrée (38, 40) pouvant être indiquée par la position relative des repères (64, 66).

6. °) Mélangeur thermostatique conforme à l'une des revendications 1 à 5,
**caractérisé en ce que**
les traverses (42) situées entre les premières ouvertures d'entrée (38) sont situées dans le prolongement des traverses (44) situées entre les secondes ouvertures d'entrée (40).

7. °) Mélangeur thermostatique conforme à l'une des revendications 1 à 6,
**caractérisé en ce que**
le boitier (10) est essentiellement en forme de cylindre creux tandis que le poussoir (16) est essentiellement en forme de cylindre plein.
